# EUROPEAN PATENT SPECIFICATION

(11) **EP 3 875 746 B1**
(45) Date of publication and mention of the grant of the patent: **06.04.2022**
(21) Application number: 21160567.0
(22) Date of filing: 03.03.2021
(51) Int. Cl.: F02M 25/022, F02M 25/025, F04D 29/58, F01D 25/10, F04B 39/06, F04B 53/08, F04C 15/00, F04D 13/06, H02P 29/62, F02D 19/12, F02D 41/00, F01N 3/20

(54) **METHOD TO CONTROL AN ELECTRIC MOTOR, WHICH OPERATES A PUMP TO FEED A WATER-BASED OPERATING LIQUID**
VERFAHREN ZUR STEUERUNG EINES ELEKTROMOTORS, DER EINE PUMPE ZUM FÖRDERN EINER WASSERBASIERTEN BETRIEBSFLÜSSIGKEIT BETREIBT
PROCÉDÉ DE COMMANDE D'UN MOTEUR ÉLECTRIQUE, QUI ACTIONNE UNE POMPE D'ALIMENTATION DE LIQUIDE DE FONCTIONNEMENT À BASE D'EAU

(30) Priority: 03.03.2020 IT 202000004474
(43) Date of publication of application: 08.09.2021
(73) Proprietor: Marelli Europe S.p.A., 20011 Corbetta (MI) (IT)
(72) Inventor: ZITO, Antonio, 40131 BOLOGNA (IT); BARBUTO, Antonio, 40133 BOLOGNA (IT)
(74) Representative: Maccagnan, Matteo

(56) References cited:
- EP-A1- 3 085 912
- EP-A1- 3 480 438
- EP-A2- 3 220 540
- EP-B1- 3 085 912
- EP-B1- 3 220 540
- EP-B1- 3 480 438
- WO-A1-2016/089397
- CN-A- 103 743 059
- DE-A1-102012 206 822
- DE-A1-102016 010 749
- DE-A1-102016 121 525
- DE-A1-102018 200 690
- JP-A- H11 159 467

## Description

### TECHNICAL FIELD

The invention relates to a method to control an electric motor, which operates a pump to feed a water-based operating liquid.

The invention finds advantageous application in an injection system for a water-based operating liquid for an internal combustion engine, to which explicit reference will be made in the description below without because of this loosing in generality.

### PRIOR ART

As it is known, when dealing with internal combustion engines, manufacturers suggested feeding water, in addition to fuel, into the combustion chambers defined inside the cylinders in order to cool the air/fuel mixture, thus increasing the resistance to knock phenomena.

The water feeding system comprises a tank, which is filled with demineralised water (in order to avoid the formation of scaling) and is generally provided with a heating device, which is used to melt possible ice when the temperature on the outside is particularly low and the internal combustion engine starts cold after having been turned off for a long time. The water feeding system further comprises (at least) an electromagnetic injector, which receives water from the tank through a pump drawing it from the tank.

Water freezes at a temperature of zero degrees Celsius, which can easily be reached by a vehicle that, in cold weathers and in the winter time, is parked on the outside; possible residual water left inside the injector or the pump could freeze when the vehicle is parked, thus causing damages to the injector or the pump. In order to avoid damages or obstructions caused by water freezing inside the injector, inside the feeding duct and inside the pump, upon turning-off of the internal combustion engine the injector, the feeding duct and the pump must be emptied from residual water (which is re-introduced into the tank).

However, even if the injector, the feeding duct and the pump are emptied, when the internal combustion engine is turned off and then started again under cold conditions after the vehicle has been parked for a long time at external temperatures significantly below zero degrees Celsius, the pump can anyway be subjected to damages caused by the presence of ice blocks.

Patent application DE102018200690A1 and patent application EP3480438A1 describe an injection system for a water-based operating liquid for an internal combustion engine; an electric motor, which operates a pump of the injection system, is controlled both with a pumping operating mode, so as to cause the rotation of an impeller of the pump, and with a heating operating mode, so as to generate heat without causing the rotation of the impeller of the pump.

CN 103 743 059 A, JP H11 159467 A, EP 3 220 540 A2 and DE 10 2016 121525 A1 show heating of an electric motor.

### DESCRIPTION OF THE INVENTION

The object of the invention is to provide a method to control an electric motor, which operates a pump to feed a water-based operating liquid, said control method being easy and economic to be implemented, not suffering from the drawbacks described above and, in particular, ensuring the absence of damages to the pump when the internal combustion engine is started cold after the vehicle has been parked for a long time at external temperatures significantly below zero degrees Celsius.

According to the invention, there is provided a method to control an electric motor, which operates a pump to feed a water-based operating liquid, according to the appended claims.

The appended claims describe preferred embodiments of the invention and form an integral part of the description.

### BRIEF DESCRIPTION OF THE DRAWINGS

The invention will now be described with reference to the accompanying drawings, showing a non-limiting embodiment thereof, wherein:
- figure 1 is a schematic view of an internal combustion engine provided with a water injection system according to the invention;
- figure 2 is a schematic view of the injection system of figure 1;
- figure 3 is a schematic view of an electric motor operating a pump of the injection system of figure 1, highlighting the electric currents absorbed by the electric motor during a normal operation of the pump; and
- figure 4 is a schematic view of the electric motor operating a pump of the injection system of figure 1, highlighting the electric currents absorbed by the electric motor during the execution of a pump pre-heating procedure.

### PREFERRED EMBODIMENTS OF THE INVENTION

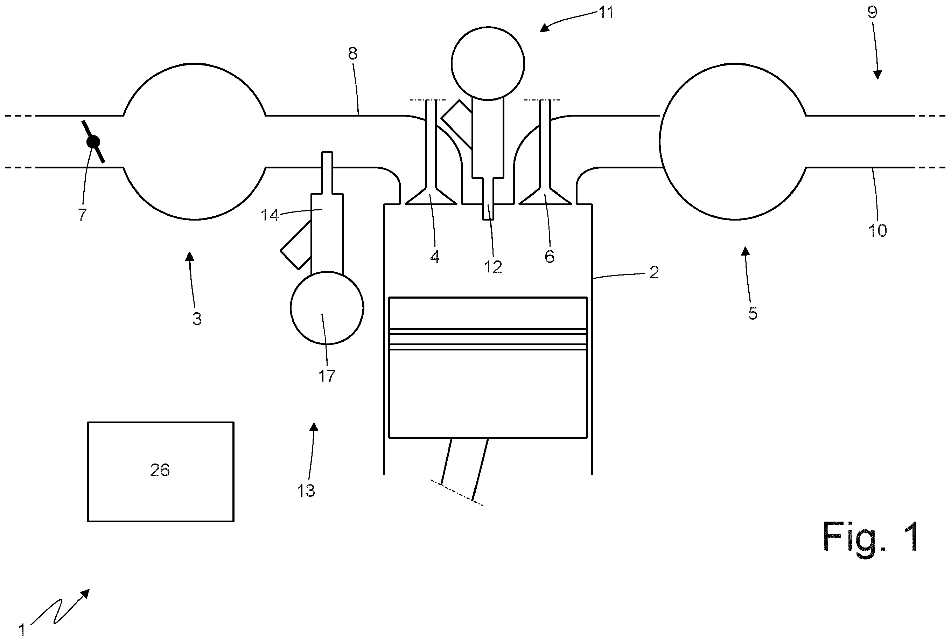

In figure 1, number 1 indicates, as a whole, an internal combustion engine provided with four cylinders 2 (only one of them being shown in the accompanying figure), each connected to an intake manifold 3 through two intake valves 4 (only one of them being shown in the accompanying figure) and to an exhaust manifold 5 through two exhaust valves 6 (only one of them being shown in the accompanying figure). Inside the intake manifold 3 there is defined an intake chamber (the so-called "*plenum chamber*"), which receives fresh air (namely, air coming from the outside) through an inlet opening adjusted by a throttle valve 7 and communicates with each cylinder 2 through an outlet opening leading into a respective intake duct 8 ending in the area of the two intake valves 4.

The internal combustion engine 1 comprises an exhaust system 9, which releases the exhaust gases produced by the combustion into the atmosphere (after suitable treatments) and comprises an exhaust duct 10 originating from the exhaust manifold 5; namely, in the combustion chambers of the cylinders, following the combustion, exhaust gases are generated, which subsequently flow through the exhaust duct 10 is order to be then released into the atmosphere.

The internal combustion engine 1 comprises a fuel injection system 11, which injects fuel into the cylinders 2 by means of corresponding electromagnetic fuel injectors 12 (which are normally closed, namely remain closed in the absence of an opening command). In other words, the injection system 11 comprises four electromagnetic fuel injectors 12, each injecting fuel directly into a respective cylinder 2 and receiving fuel under pressure from a common rail; the fuel injection system 11 further comprises a high-pressure pump (not shown), which feeds fuel to the common rail and receives fuel from a low-pressure pump (not shown) arranged inside a fuel tank (not shown).

The internal combustion engine 1 comprises a water injection system 13, which injects water into the intake ducts 8 by means of corresponding electromagnetic water injectors 14 (which are normally closed, namely remain closed in the absence of an opening command). In other words, the injection system 13 comprises four water injectors 14, each directly injecting water into a respective intake duct 8.

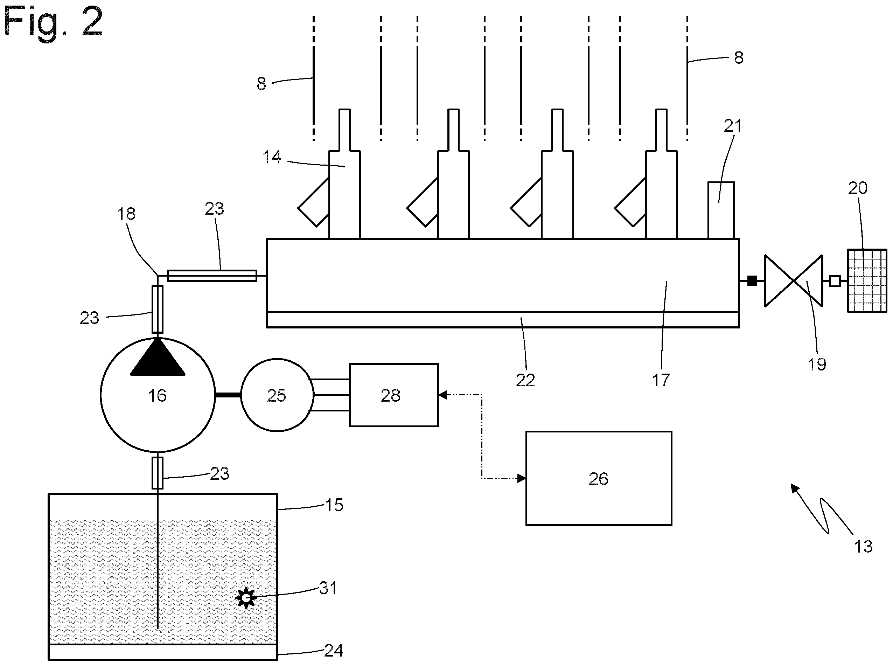

According to figure 2, the injection system 13 comprises a tank 15 containing water and a pump 16, which draws water from the tank 15 in order to feed water under pressure to a common rail 17 through a feeding duct 18 (which originates from the tank 15 and reaches the common rail 17 going through the pump 16); the common rail 17 is connected to the electromagnetic water injectors 14, which, hence, directly receive water from the common rail 17. In other words, the common rail 17 is the end part of the feeding duct 18, to which the electromagnetic water injectors 14 are connected. It should be pointed out that the pump 16 is reversible, namely it can be operated in a direction to suck water from the tank 15 and feed water into the common rail 17 through the feeding duct 18 and can be operated in an opposite direction to suck water from the common rail 17 and feed water into the tank 15 through the feeding duct 18.

Each electromagnetic water injector 14 is designed to inject the atomized water into the corresponding intake duct 8 and is fixed to the common rail 17, namely is directly mounted on the common rail 17.

The injection system 13 further comprises a two-way release valve 19 (namely, a valve that allows air to flow in both directions), which is connected to the common rail 17 (namely, originates from the common rail 17) and is designed to connect the common rail 17 to an air intake 20, which communicates with the atmosphere and can be provided with a mechanical filter.

The release valve 19 preferably is a solenoid valve (namely, it is provided with an electric actuator which can be remotely controlled) and is movable between a closed position, in which the common rail 17 is (pneumatically) isolated from the air vent 20, and an open position, in which the common rail 17 is (pneumatically) connected to the air vent 20.

The injection system 13 further comprises a pressure sensor 21, which is mounted on the common rail 17 and is designed to detect a water pressure P_{H2O} inside the common rail 17.

According to a preferred embodiment shown in figure 2, the injection system 13 comprises an electric heater 22, which is coupled to the common rail 17 and is designed to generate heat to heat the common rail 17 (and, hence, possible water contained in the common rail 17), an electric heater 23, which is coupled to the feeding duct 18 and is designed to generate heat to heat the feeding duct 18 (and, hence, possible water contained in the feeding duct 18), and an electric heater 24, which is coupled to the tank 15 and is designed to generate heat to heat the tank 15 (and, hence, water contained in the tank 15).

According to figure 2, the pump 16 is operated, namely is caused to rotate, by an electric motor 25 (of the brushless type), which is mechanically integrated with the pump 16; namely, the electric motor 25 is very close to the pump 16 and forms one single assembly with the pump 16.

Finally, the injection system 13 comprises a control unit 26, which controls, among other things, the electric motor 25 of the pump 16, the electromagnetic water injectors 14, the release valve 19 and the electric heaters 22, 23 and 24.

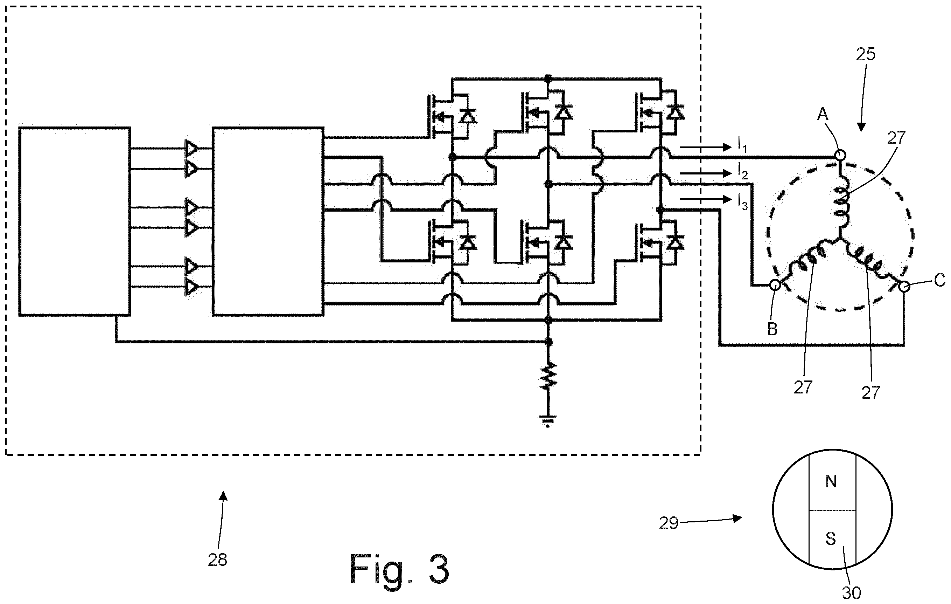

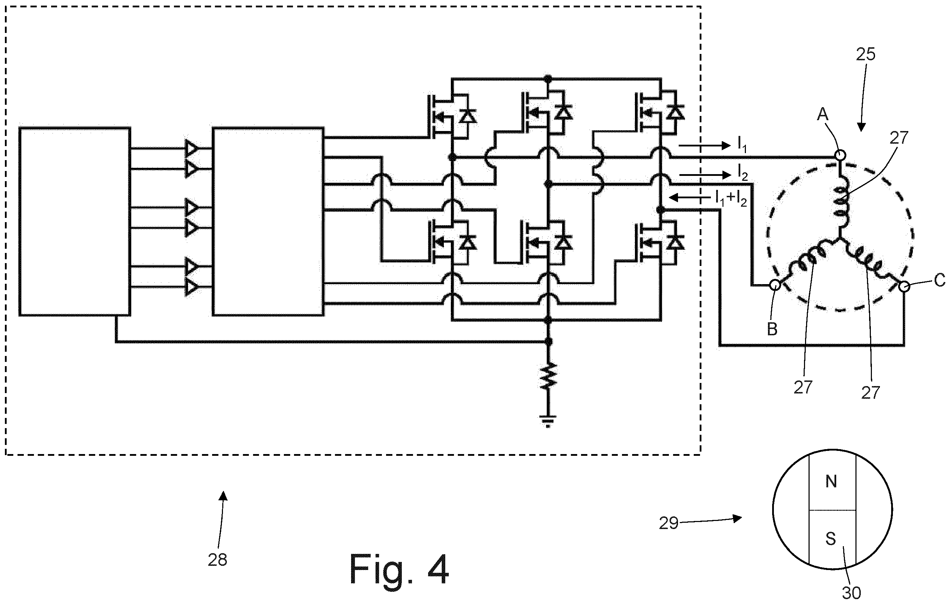

According to figures 3 and 4, the electric motor 25 has (at least) three three-phase stator windings 27, which are controlled by an electronic power converter 28 (in particular, an inverter), which is supplied with a direct current by an electric system of the vehicle housing the internal combustion engine 1.

In the embodiment shown in the accompanying figures, the three three-phase stator windings 27 are connected to one another in a star-like configuration, whereas, according to a different embodiment which is not shown herein, the three three-phase stator windings 27 are connected to one another in a triangle-like configuration.

The electric motor 25 further has a rotor 29, which is mounted in a rotary manner, is mechanically coupled to an impeller of the pump 16 and supports at least one permanent magnet 30; the rotor 29 can alternatively be an inner rotor (namely, arranged inside the stator) or an outer rotor (namely, arranged around the stator).

When the internal combustion engine 1 is turned on, the pump 16 is operated so as to draw water from the tank 15 and pump water under pressure towards the common rail 17 in order to keep the water pressure P_{H2O} inside the common rail 17 at a desired value (which can change depending on the engine point); to this regard, the pump 16 is preferably controlled in its rotation using the measure provided by the pressure sensor 21, which detects the actual value of the water pressure P_{H2O} inside the common rail 17. As a consequence, when the internal combustion engine 1 is turned on, the control unit 26 gives the electronic power converter 28 instructions to control the electric motor 25 so as to cause (when needed) the rotation of the rotor 29 of the electric motor 25 (and, hence, of the impeller of the pump 16). In particular, according to figure 3, the electronic power converter 28 supplies the three windings 27 with three corresponding alternating electric currents I₁, I₂ and I₃, which (generally) are out of phase by 120°, so as to generate a rotary magnetic field, which drags the permanent magnet 30 and, hence, causes the rotation of the rotor 29.

As a consequence, when the internal combustion engine 1 is turned on (namely, when the injection system 11 injects fuel into the cylinders 2 and the injection system 13 injects water into the intake ducts 8), the control unit 26 keeps the release valve 19 permanently closed, controls the pump 16 in order to feed water under pressure from the tank 15 to the common rail 17 where the electromagnetic water injectors 14 are mounted and cyclically controls each electromagnetic water injector 14 in order to inject atomized water into the corresponding intake duct 8 depending on the engine point (namely, depending on the features of the combustion inside the cylinders 2).

When the internal combustion engine 1 is turned off, the control unit 26 controls the pump 16, the electromagnetic water injectors 14 and the release valve 19 in a known manner (for example, as described in patent application EP3715614A1) in order to drain water from the electromagnetic water injectors 14, the common rail 17 (which constitutes the end part of the feeding duct 18), the feeding duct 18 and the pump 16.

When, on the other hand, the internal combustion engine 1 is started, the feeding duct 18 and the common rail 17 are empty (since they were emptied from the water, as described above, when the internal combustion engine 1 was turned off) and, therefore, they need to be filled. As a consequence, when the internal combustion engine 1 is started, the control unit 26 operates the pump 16 so as to feed water from the tank 15 to the common rail 17 through the feeding duct 18 and, at the same time, it opens the release valve 19 to let out the air present in the feeding duct 18 and in the common rail 17 as the water level increases (for example, as described in patent application EP3715614A1).

The control unit 26 is connected to (at least) an external temperature sensor and, if necessary, also to a temperature sensor 31 measuring the water temperature T_{H2O} inside the tank 15 and/or to a temperature sensor measuring the temperature of a cooling liquid of the internal combustion engine 1. When a reference temperature (external temperature, temperature of the cooling liquid of the internal combustion engine 1 or water temperature T_{H2O} inside the tank 15) is below zero degrees Celsius, the control unit 16 turns on the electric heaters 22, 23 and 24 in order to melt possible ice present in the water circuit and, if necessary, activates a pre-heating procedure (described below) to heat the walls of the pump 16.

According to a preferred embodiment, in case the reference temperature (external temperature, temperature of the cooling liquid of the internal combustion engine 1 or water temperature T_{H2O} inside the tank 15) is smaller than a limit value VL1, the control unit 26 is configured to turn on the electric heaters 22, 23 and 24. In case the reference temperature (external temperature, temperature of the cooling liquid of the internal combustion engine 1 or water temperature T_{H2O} inside the tank 15) is smaller than a threshold value VL2 (which is smaller than the limit value VL1), the control unit 26 is configured to activate the pre-heating procedure, which entails controlling the electric motor 25 so as to generate a thermal power due to Joule effect (namely, heat) that is sufficient to pre-heat the inner walls of the pump 16 within a predetermined time limit and without causing the rotation of the rotor 29 (and, hence, of the pump 16).

Depending on the result of the comparison between the reference temperature (external temperature, temperature of the cooling liquid of the internal combustion engine 1 or water temperature T_{H2O} inside the tank 15) and the limit value VL1 as well as the threshold value VL2, the following conditions are possible:
- if the reference temperature exceeds the limit value VL1, the electronic control unit 26 is configured not to turn on the electric heaters 22, 23 and 24 and not to activate the pre-heating procedure for the pump 16;
- if the reference temperature is comprised between the limit value VL1 and the threshold value VL2, the electronic control unit 26 is configured to turn on the electric heaters 22, 23 and 24, but not to activate the pre-heating procedure for the pump 16; and
- if the water temperature T_{H2O} is smaller than the threshold value VL2, the electronic control unit 26 is configured both to turn on the electric heaters 22, 23 and 24 and to activate the pre-heating procedure for the pump 16.

Possible ice (with a relevant size) present inside the pump 16 could be extremely dangerous for the integrity of the pump 16, because it could break the rotary parts of the pump 16; in other words, possible relatively large-sized fragments of ice present inside the pump 16 could break the rotary parts of the pump 16, if the pump 16 were caused to rotate with (large-sized) ice present on the inside. When the internal combustion engine 1 is started, the pump 16 is substantially free from water, since it was previously emptied (but not dried) when the internal combustion engine 1 was stopped; in the pump 16 there could be residual traces of water (basically drops), which, even if they froze, would produce very small ice pieces, which, hence, normally are not dangerous.

However, when the internal combustion engine 1 is started, the walls of the pump 16 substantially are at ambient temperature and, if said ambient temperature is significantly below zero degrees Celsius, when water coming from the tank 15 flows into the pump 16 for the first time after starting the internal combustion engine 1, said water could freeze in contact with the walls of the pump 16, thus determining the formation of relatively large-sized ice pieces, which could damage the pump 16.

In order to prevent water coming from the tank 16 from freezing in contact with the walls of the pump 16 that substantially are at ambient temperature (obviously, only when said ambient temperature is significantly below zero degrees Celsius) and, furthermore, in order to melt possible residual ice present inside the pump 16, the walls of the pump 16 are pre-heated by activating the pre-heating procedure, which entails controlling the electric motor 25 so as to generate a thermal power due to Joule effect (namely, heat) that is sufficient to pre-heat the inner walls of the pump 16. As mentioned above, the electric motor 25 is integrated with the pump 16, hence the heat generated through Joule effect in the electric motor 25 is quickly transmitted to the pump 16.

Below there is a description of the pre-heating strategy implemented by the electronic control unit 26, which entails controlling the electric motor 25 in a non-efficient manner (namely, in the absence of movement) so as to generate in the windings 27 of the electric motor 25, due to Joule effect, a thermal power that is sufficient to pre-heat the inner walls of the pump 16; in other words, the control unit 26 uses the windings 27 of the electric motor 25 not to generate a rotary magnetic field that causes an actual rotation of the rotor 29 (and, hence, of the pump 16), but only as electric resistances to generate heat through Joule effect.

As already mentioned above and according to figure 3, in order to cause the rotation of the rotor 29 of the electric motor 25, the electronic power converter 28 supplies the three stator windings 27 with three corresponding alternating electric currents I₁, I₂ and I₃, which (generally) are out of phase by 120°, so as to generate a rotary magnetic field, which drags the permanent magnet 30 and, hence, causes the rotation of the rotor 29. On the other hand, the pre-heating procedure, according to figure 4, requires the electronic power converter 28 to supply two sole stator windings 27 with two corresponding alternating electric currents I₁ and I₂, which are in phase with one another (namely, there is no mutual phase difference) and, adding to one another, return towards the electronic power converter 28 through the third stator winding 27. In other words, the alternating electric current I₁ flows in from a terminal A of the stator windings 27, the alternating electric current I₂ in phase with the alternating electric current I₁ (and preferably also having the same intensity as the alternating electric current I₁) flows in from a terminal B of the stator windings 27 and the sum I₁+I₂ of the alternating electric currents I₁ and I₂ (the two alternating electric currents I₁ and I₂ being in phase with one another, thus not cancelling each other out) flows in from a terminal C of the stator windings 27.

The two alternating electric currents I₁ and I₂, which are in phase with one another and are supplied to two stator windings 27, generate a stationary magnetic field (namely, completely still), which keeps the rotor 29 in a fixed and predetermined parking position (namely, in alignment with the stationary magnetic field, which always has the same orientation determined by the structure of the electric motor 25) and, if necessary, initially moves the rotor 29 towards the fixed and predetermined parking position if, at first, the rotor 29 is in a position other than the parking position (having the rotor 29 make, in the worst case scenario, a maximum rotation of 180°). By operating as described above, heat can be generated, through Joule effect, in the stator windings 27 of the electric motor 25, having the certainty that the rotor 29 always remains still in the fixed and predetermined position.

According to a preferred embodiment, the intensity of the two alternating electric currents I₁ and I₂ supplied during the pre-heating procedure is not always the same and depends on the difference (in absolute value) between the reference temperature and the threshold value VL2: the more the threshold value VL2 is smaller than the reference temperature, the greater the intensity of the two alternating electric currents I₁ and I₂; namely, the intensity of the two alternating electric currents I₁ and I₂ increases as the difference (in absolute value) between the reference temperature and the threshold value VL2 increases.

When the pump 16 is definitively deactivated after the turning-off of the internal combustion engine 1 (namely, when the injection system 13 switches to the parking condition) and at the end of the water draining, the electric motor 25 is briefly (approximately for 0.5-3.0 seconds) controlled according to the defrosting procedure described above (namely, according to figure 4, having two sole electric currents I₁ and I₂, which are in phase with another, circulate) so as to place the rotor 29 in the fixed and predetermined parking position; in this way, the rotor 29 is left in the fixed and predetermined parking position and, in case of a following activation (after a prolonged parking at an external temperature significantly below zero degrees Celsius) of the defrosting procedure described above, the rotor 29 does not make any movement, since it already is in the parking position (hence, any movement of the impeller of the pump 16 - even the smallest one - is avoided, thus completely eliminating the possibility of damages because of the presence of ice).

In the embodiment shown in the accompanying figures, the injection of water is indirect and the electromagnetic water injectors 14 do not inject water into the cylinders 2, but inject water into the intake ducts 8 upstream of the cylinders 2. According to an alternative embodiment which is not shown herein, the injection of water is direct and the electromagnetic water injectors 14 water into the cylinders 2.

In the embodiment shown in the accompanying figures, the injection of fuel is direct and the electromagnetic fuel injectors 12 inject fuel into the cylinders 2. According to an alternative embodiment which is not shown herein, the injection of fuel is indirect and the electromagnetic fuel injectors 12 inject fuel into the intake ducts 8 upstream of the cylinders 2.

In the embodiment shown in the accompanying figures, the electric motor 25 comprises three stator windings 27. According to a different embodiment which is not shown herein, the electric motor 25 comprises six or nine stator windings 27; even in this case, during the pre-heating procedure, only four (out of six) or six (out of nine) stator windings 27 are supplied with respective alternating electric currents in phase with one another, whereas the remaining stator windings 27 are used for the return of the alternating electric currents adding to one another.

In the embodiment shown in the accompanying figures, the injection system 13 is used to inject demineralised water (namely, a water-based operating liquid) into the combustion chambers obtained in the cylinders 2 of the internal combustion heat engine 1 in order to increase the efficiency of the combustion and/or increase the power generated. According to a different embodiment which is not shown herein, a similar injection system 13 is used to inject a water solution of urea (namely, a water-based operating liquid containing urea) along the exhaust duct 10 and upstream of a SCR catalytic converter.

The direct or indirect fuel injection can be combined with the direct or indirect water injection.

According to other embodiments, the pre-heating procedure, to which the walls of the pump 16 are subjected by exploiting the heat generated, through Joule effect, in the stator windings 27 of the electric motor 25, can also be applied in industries other than the automotive industry, in all those situations in which a pump 16 operated by an electric motor 25 (obviously integrated with the pump 16 in order to be very close to the pump 16) is used to pump a water-based operating liquid (hence, pure water or a water solution), which, because of the external temperature, can freeze.

The embodiments described herein can be combined with one another.

The control method described above has numerous advantages for it is easy and economic to be implemented (as it does not require any hardware change, but simply needs software integrations) and, especially, avoids damages to the pump 16 when the internal combustion engine 1 is started cold after the vehicle has been parked for a long time at external temperatures significantly below zero degrees Celsius.

### LIST OF THE REFERENCE NUMBERS OF THE FIGURES

- 1: internal combustion engine
- 2: cylinders
- 3: intake manifold
- 4: intake valves
- 5: exhaust manifold
- 6: exhaust valves
- 7: throttle valve
- 8: intake duct
- 9: exhaust system
- 10: exhaust duct
- 11: injection system
- 12: electromagnetic injector
- 13: injection system
- 14: electromagnetic injector
- 15: tank
- 16: pump
- 17: common rail
- 18: feeding duct
- 19: release valve
- 20: air intake
- 21: pressure sensor
- 22: electric heater
- 23: electric heater
- 24: electric heater
- 25: electric motor
- 26: control unit
- 27: windings
- 28: electronic power converter
- 29: rotor
- 30: permanent magnet
- 31: temperature sensor
- I₁: alternating electric current
- I₂: alternating electric current
- I₃: alternating electric current
- A: terminal
- B: terminal
- C: terminal

## Claims

1. A method to control an electric motor (25), which operates a pump (16) to feed a water-based operating liquid in an injection feeding system (13) for an internal combustion engine (1); wherein the electric motor (25) comprises three stator windings (27) and a rotor (29), which is provided with at least one permanent magnet (30); the control method comprises the steps of:
supplying, during a normal operation to pump the water-based operating liquid, the three stator windings (27) with three corresponding alternating electric currents (I₁,I₂,I₃), which are out of phase, so as to generate a rotary magnetic field, which drags the permanent magnet (30) and, hence, causes the rotation of the rotor (29); and
supplying, during a pre-heating procedure to pre-heat the pump (16) before starting to pump the water-based operating liquid, the stator windings (27) with a system of alternating electric currents (I₁,I₂), which does not determine any movement of the rotor (29) and only generates heat through Joule effect in the stator windings (27);
the control method is **characterized in that** it comprises the steps of:
supplying, during the pre-heating procedure to pre-heat the pump (16) before starting to pump the water-based operating liquid, two sole stator windings (27) with two corresponding alternating electric currents (I₁,I₂), which are in phase with one another and, adding to one another, return through a third stator winding (27); and
supplying, when the electric motor (25) is turned off for an extended stop after a turning-off of the internal combustion engine (1) and namely when the injection feeding system (13) switches to a parking condition, two sole stator windings (27) with two corresponding alternating electric currents (I₁,I₂), which are in phase with one another and, adding to one another, return through a third stator winding (27), so as to put the rotor (29) in a fixed and predetermined parking position.

2. The injection method according to claim 1 and comprising the further steps of:
determining a reference temperature; and
activating the pre-heating procedure to pre-heat the pump (16) before starting to pump the water-based operating liquid only if the reference temperature is smaller than a threshold value (VL2).

3. The injection method according to claim 2, wherein the intensity of the two alternating electric currents (I₁,I₂) supplied during the pre-heating procedure depends on a difference between the reference temperature and the threshold value (VL2).

4. The injection method according to claim 3, wherein the intensity of the two alternating electric currents (I₁,I₂) supplied during the pre-heating procedure increases as the difference between the reference temperature and the threshold value (VL2) increases.

5. The injection method according to one of the claims from 1 to 4, wherein the two alternating electric currents (I₁,I₂) supplied during the pre-heating procedure have the same intensity.

6. A control unit (26) to control an electric motor (25), which operates a pump (16) to feed a water-based operating liquid in an injection feeding system (13) for an internal combustion engine (1); wherein the electric motor (25) comprises three stator windings (27) and a rotor (29), which is provided with at least one permanent magnet (30); the control unit (26) is configured for:
supplying, during a normal operation to pump the water-based operating liquid, the three stator windings (27) with three corresponding alternating electric currents (I₁,I₂,I₃), which are out of phase, so as to generate a rotary magnetic field, which drags the permanent magnet (30) and, hence, causes the rotation of the rotor (29); and
supplying, during a pre-heating procedure to pre-heat the pump (16) before starting to pump the water-based operating liquid, the stator windings (27) with a system of alternating electric currents (I₁,I₂), which does not determine any movement of the rotor (29) and only generates heat through Joule effect in the stator windings (27);
the control unit (26) is **characterized in that** it is configured for:
supplying, during the pre-heating procedure to pre-heat the pump (16) before starting to pump the water-based operating liquid, two sole stator windings (27) with two corresponding alternating electric currents (I₁,I₂), which are in phase with one another and, adding to one another, return through a third stator winding (27); and
supplying, when the electric motor (25) is turned off for an extended stop after a turning-off of the internal combustion engine (1) and namely when the injection feeding system (13) switches to a parking condition, two sole stator windings (27) with two corresponding alternating electric currents (I₁,I₂), which are in phase with one another and, adding to one another, return through a third stator winding (27), so as to put the rotor (29) in a fixed and predetermined parking position.

7. An internal combustion engine (1) comprising:
at least one cylinder (2) provided with a combustion chamber, in which, following the combustion, exhaust gases are generated;
an exhaust duct (10), which is flown through by the exhaust gases coming from the combustion chamber;
a water-based operating liquid injection feeding system (13) comprising: a tank (15), which is designed to contain a quantity of a water-based operating liquid, at least one injector (14) to inject the water-based operating liquid, and a pump (16), which is operated by an electric motor (25) and draws the water-based operating liquid from the tank (15) in order to feed the water-based operating liquid to the injector (14); and
a control unit (26);
wherein the electric motor (25) comprises three stator windings (27) and a rotor (29), which is provided with at least one permanent magnet (30);
wherein the control unit (26) is configured for supplying, during a normal operation to pump the water-based operating liquid, the three stator windings (27) with three corresponding alternating electric currents (I₁,I₂,I₃), which are out of phase, so as to generate a rotary magnetic field, which drags the permanent magnet (30) and, hence, causes the rotation of the rotor (29); and
wherein the control unit (26) is configured for supplying, during a pre-heating procedure to pre-heat the pump (16) before starting to pump the water-based operating liquid, the stator windings (27) with a system of alternating electric currents (I₁,I₂), which does not determine any movement of the rotor (29) and only generates heat through Joule effect in the stator windings (27);
the internal combustion engine (1) is **characterized in that** the control unit (26) is configured for:
supplying, during the pre-heating procedure to pre-heat the pump (16) before starting to pump the water-based operating liquid, two sole stator windings (27) with two corresponding alternating electric currents (I₁,I₂), which are in phase with one another and, adding to one another, return through a third stator winding (27); and
supplying, when the electric motor (25) is turned off for an extended stop after a turning-off of the internal combustion engine (1) and namely when the injection feeding system (13) switches to a parking condition, two sole stator windings (27) with two corresponding alternating electric currents (I₁,I₂), which are in phase with one another and, adding to one another, return through a third stator winding (27), so as to put the rotor (29) in a fixed and predetermined parking position.

8. The internal combustion engine (1) according to claim 7, wherein:
the injection feeding system (13) comprises at least one electric heater (22, 23, 24); and
the control unit (26) is configured to turn on, following a cold start of the internal combustion engine (1), the electric heater (22, 23, 24).

9. The internal combustion engine (1) according to claim 8, wherein:
the control unit (26) is configured to determine a reference temperature;
the control unit (26) is configured to turn on, following a cold start of the internal combustion engine (1), the electric heater (22, 23, 24), when the reference temperature is smaller than a first threshold value (VL1); and
the control unit (26) is configured to carry out the pre-heating procedure to pre-heat the pump (16) before starting to pump the water-based operating liquid, when the reference temperature is smaller than a second threshold value (VL2), which is smaller than the first threshold value (VL1).

10. The internal combustion engine (1) according to claim 7, 8 or 9, wherein the control unit (26) is configured to control the pump (16) so as to empty the injector (14) and the pump (16) form the water-based operating liquid, when the internal combustion engine (1) is turned off.

## Patentansprüche

1. Verfahren zum Steuern eines Elektromotors (25), der eine Pumpe (16) zum Zuführen einer wasserbasierten Betriebsflüssigkeit in einem Einspritzzuliefersystem (13) für einen Verbrennungsmotor (1) betreibt; wobei der Elektromotor (25) drei Statorwicklungen (27) und einen Rotor (29) umfasst, der mit mindestens einem Permanentmagneten (30) versehen ist; wobei das Steuerverfahren die Schritte umfasst:
Speisen der drei Statorwicklungen (27) während eines Normalbetriebs zum Pumpen der wasserbasierten Betriebsflüssigkeit mit drei korrespondierenden elektrischen Wechselströmen (I₁, I₂, I₃), die phasenverschoben sind, um so ein Drehmagnetfeld zu erzeugen, welches den Permanentmagneten (30) zieht und somit die Rotation des Motors (29) verursacht; und
Speisen der Statorwicklungen (27) während eines Vorwärmvorgangs zur Vorwärmung der Pumpe (16) vor dem Beginn des Pumpens der wasserbasierten Betriebsflüssigkeit mit einem System aus elektrischen Wechselströmen (I₁, I₂,), was keine Bewegung des Rotors (29) bedingt und durch den Joule-Effekt in den Statorwicklungen (27) nur Wärme erzeugt;
wobei das Steuerverfahren **dadurch gekennzeichnet ist, dass** es die Schritte umfasst:
Speisen von zwei einzelnen Statorwicklungen (27) während des Vorwärmvorgangs zur Vorwärmung der Pumpe (16) vor dem Beginn des Pumpens der wasserbasierten Betriebsflüssigkeit mit zwei korrespondierenden elektrischen Wechselströmen (I₁, I₂,), die miteinander in Phase sind und miteinander addiert durch eine dritte Statorwicklung (27) zurücklaufen; und
Speisen von zwei einzelnen Statorwicklungen (27), wenn der Elektromotor (25) für eine längere Betriebsunterbrechung nach dem Abschalten des Verbrennungsmotors (1) abgeschaltet ist und insbesondere, wenn das Einspritzzuliefersystem (13) in einen Parkzustand schaltet, mit zwei korrespondierenden elektrischen Wechselströmen (I₁, I₂,), die miteinander in Phase sind und miteinander addiert durch eine dritte Statorwicklung (27) zurücklaufen, um so den Rotor (29) in eine festgelegte und vorbestimmte Parkposition zu setzen.

2. Einspritzverfahren nach Anspruch 1 und umfassend die weiteren Schritte:
Ermitteln einer Referenztemperatur; und
Aktivieren des Vorwärmvorgangs zur Vorwärmung der Pumpe (16), bevor das Pumpen der wasserbasierten Betriebsflüssigkeit begonnen wird, nur dann, wenn die Referenztemperatur kleiner als ein Schwellenwert (VL2) ist.

3. Einspritzverfahren nach Anspruch 2, wobei die Intensität der beiden elektrischen Wechselströme (I₁, I₂,), die während des Vorwärmvorgangs eingespeist werden, von einer Differenz zwischen der Referenztemperatur und dem Schwellenwert (VL2) abhängig ist.

4. Einspritzverfahren nach Anspruch 3, wobei die Intensität der beiden elektrischen Wechselströme (I₁, I₂,), die während des Vorwärmvorgangs eingespeist werden, mit zunehmender Differenz zwischen der Referenztemperatur und dem Schwellenwert (VL2) zunimmt.

5. Einspritzverfahren nach einem der Ansprüche von 1 bis 4, wobei die beiden elektrischen Wechselströme (I₁, I₂,), die während des Vorwärmvorgangs eingespeist werden, dieselbe Intensität haben.

6. Steuereinheit (26) zum Steuern eines Elektromotors (25), der eine Pumpe (16) zum Zuführen einer wasserbasierten Betriebsflüssigkeit in einem Einspritzzuliefersystem (13) für einen Verbrennungsmotor (1) betreibt; wobei der Elektromotor (25) drei Statorwicklungen (27) und einen Rotor (29) umfasst, der mit mindestens einem Permanentmagneten (30) versehen ist; wobei die Steuereinheit (26) konfiguriert ist zum:
Speisen der drei Statorwicklungen (27) während eines Normalbetriebs zum Pumpen der wasserbasierten Betriebsflüssigkeit mit drei korrespondierenden elektrischen Wechselströmen (I₁, I₂, I₃), die phasenverschoben sind, um so ein Drehmagnetfeld zu erzeugen, welches den Permanentmagneten (30) zieht und somit die Rotation des Motors (29) verursacht; und
Speisen der Statorwicklungen (27) während eines Vorwärmvorgangs zur Vorwärmung der Pumpe (16) vor dem Beginn des Pumpens der wasserbasierten Betriebsflüssigkeit mit einem System aus elektrischen Wechselströmen (I₁, I₂,), was keine Bewegung des Rotors (29) bedingt und durch den Joule-Effekt in den Statorwicklungen (27) nur Wärme erzeugt;
wobei die Steuereinheit (26) **dadurch gekennzeichnet ist, dass** sie konfiguriert ist zum:
Speisen von zwei einzelnen Statorwicklungen (27) während des Vorwärmvorgangs zur Vorwärmung der Pumpe (16) vor dem Beginn des Pumpens der wasserbasierten Betriebsflüssigkeit mit zwei korrespondierenden elektrischen Wechselströmen (I₁, I₂,), die miteinander in Phase sind und miteinander addiert durch eine dritte Statorwicklung (27) zurücklaufen; und
Speisen von zwei einzelnen Statorwicklungen (27), wenn der Elektromotor (25) für eine längere Betriebsunterbrechung nach dem Abschalten des Verbrennungsmotors (1) abgeschaltet ist und insbesondere, wenn das Einspritzzuliefersystem (13) in einen Parkzustand schaltet, mit zwei korrespondierenden elektrischen Wechselströmen (I₁, I₂,), die miteinander in Phase sind und miteinander addiert durch eine dritte Statorwicklung (27) zurücklaufen, um so den Rotor (29) in eine festgelegte und vorbestimmte Parkposition zu setzen.

7. Verbrennungsmotor (1), umfassend:
mindestens einen Zylinder (2), der mit einem Brennraum versehen ist, in welchem auf die Verbrennung folgend Abgase erzeugt werden;
eine Abgasleitung (10), die von den aus dem Brennraum kommenden Abgasen durchströmt wird;
ein Einspritzzuliefersystem (13) für eine wasserbasierte Betriebsflüssigkeit, umfassend: einen Tank (15), der dafür konstruiert ist, eine Menge einer wasserbasierten Betriebsflüssigkeit zu enthaltend, mindestens einen Injektor (14) zum Einspritzen der wasserbasierten Betriebsflüssigkeit und eine Pumpe (16), die von einem Elektromotor (25) betrieben wird und die wasserbasierte Betriebsflüssigkeit aus dem Tank (15) ansaugt, um die wasserbasierte Betriebsflüssigkeit zu dem Injektor (14) zuzuliefern; und
eine Steuereinheit (26);
wobei der Elektromotor (25) drei Statorwicklungen (27) und einen Rotor (29) umfasst, der mit mindestens einem Permanentmagneten (30) versehen ist;
wobei die Steuereinheit (26) konfiguriert ist zum Speisen der drei Statorwicklungen (27) während eines Normalbetriebs zum Pumpen der wasserbasierten Betriebsflüssigkeit mit drei korrespondierenden elektrischen Wechselströmen (I₁, I₂, I₃), die phasenverschoben sind, um so ein Drehmagnetfeld zu erzeugen, welches den Permanentmagneten (30) zieht und somit die Rotation des Motors (29) verursacht; und
wobei die Steuereinheit (26) konfiguriert ist zum Speisen der Statorwicklungen (27) während eines Vorwärmvorgangs zur Vorwärmung der Pumpe (16) vor dem Beginn des Pumpens der wasserbasierten Betriebsflüssigkeit mit einem System aus elektrischen Wechselströmen (I₁, I₂,), was keine Bewegung des Rotors (29) bedingt und durch den Joule-Effekt in den Statorwicklungen (27) nur Wärme erzeugt;
wobei der Verbrennungsmotor **dadurch gekennzeichnet ist, dass** die Steuereinheit (26) konfiguriert ist zum:
Speisen von zwei einzelnen Statorwicklungen (27) während des Vorwärmvorgangs zur Vorwärmung der Pumpe (16) vor dem Beginn des Pumpens der wasserbasierten Betriebsflüssigkeit mit zwei korrespondierenden elektrischen Wechselströmen (I₁, I₂,), die miteinander in Phase sind und miteinander addiert durch eine dritte Statorwicklung (27) zurücklaufen; und
Speisen von zwei einzelnen Statorwicklungen (27), wenn der Elektromotor (25) für eine längere Betriebsunterbrechung nach dem Abschalten des Verbrennungsmotors (1) abgeschaltet ist und insbesondere, wenn das Einspritzzuliefersystem (13) in einen Parkzustand schaltet, mit zwei korrespondierenden elektrischen Wechselströmen (I₁, I₂,), die miteinander in Phase sind und miteinander addiert durch eine dritte Statorwicklung (27) zurücklaufen, um so den Rotor (29) in eine festgelegte und vorbestimmte Parkposition zu setzen.

8. Verbrennungsmotor (1) nach Anspruch 7, wobei:
das Einspritzzuliefersystem (13) mindestens eine elektrische Heizung (22, 23, 24) umfasst; und
die Steuereinheit (26) dafür konfiguriert ist, auf einen Kaltstart des Verbrennungsmotors (1) folgend die elektrische Heizung (22, 23, 24) einzuschalten.

9. Verbrennungsmotor (1) nach Anspruch 8, wobei:
die Steuereinheit (26) dafür konfiguriert ist, eine Referenztemperatur zu ermitteln;
die Steuereinheit (26) dafür konfiguriert ist, auf einen Kaltstart des Verbrennungsmotors (1) folgend die elektrische Heizung (22, 23, 24) einzuschalten, wenn die Referenztemperatur kleiner ist als ein erster Schwellenwert (VL1); und
die Steuereinheit (26) dafür konfiguriert ist, den Vorwärmvorgang zur Vorwärmung der Pumpe (16) vor dem Beginn des Pumpens der wasserbasierten Betriebsflüssigkeit auszuführen, wenn die Referenztemperatur kleiner als ein zweiter Schwellenwert (VL2) ist, der kleiner ist als der erste Schwellenwert (VL1).

10. Verbrennungsmotor (1) nach Anspruch 7, 8 oder 9, wobei die Steuereinheit (26) dafür konfiguriert ist, die Pumpe (16) so zu steuern, dass der Injektor (14) und die Pumpe (16) von der wasserbasierte Betriebsflüssigkeit entleert sind, wenn der Verbrennungsmotor (1) abgeschaltet ist.

## Revendications

1. Procédé de commande d'un moteur électrique (25) qui actionne une pompe (16) pour amener un liquide de fonctionnement à base d'eau dans un système d'alimentation par injection (13) pour un moteur à combustion interne (1) ; dans lequel le moteur électrique (25) comprend trois enroulements de stator (27) et un rotor (29) qui est prévu avec au moins un aimant permanent (30) ; le procédé de commande comprend les étapes suivantes :
alimenter, pendant un fonctionnement normal pour pomper le liquide de fonctionnement à base d'eau, les trois enroulements de stator (27) avec trois courants électriques alternatifs (I₁, I₂, I₃) correspondants, qui sont déphasés, afin de générer un champ magnétique rotatif, qui entraîne l'aimant permanent (30) et donc provoque la rotation du rotor (29) ; et
alimenter, pendant une procédure de préchauffage pour préchauffer la pompe (16) avant de commencer à pomper le liquide de fonctionnement à base d'eau, les enroulements de stator (27) avec un système de courants électriques alternatifs (I₁, I₂) qui ne détermine pas le déplacement du rotor (29) et génère uniquement de la chaleur par effet Joule dans les enroulements de stator (27) ;
le procédé de commande est **caractérisé en ce qu'**il comprend les étapes suivantes :
alimenter, pendant la procédure de préchauffage pour préchauffer la pompe (16) avant de commencer à pomper le liquide de fonctionnement à base d'eau, deux enroulements de stator (27) uniques avec deux courants électriques alternatifs (I₁, I₂) correspondants qui sont en phase entre eux et en les ajoutant l'un à l'autre, reviennent par le biais d'un troisième enroulement de stator (27) ; et
alimenter, lorsque le moteur électrique (25) est arrêté pendant un arrêt prolongé, après un arrêt du moteur à combustion interne (1) et donc lorsque le système d'alimentation par injection (13) passe dans une condition de stationnement, deux enroulements de stator (27) uniques avec deux courants électriques alternatifs (I₁, I₂) correspondants, qui sont en phase entre eux, et en les ajoutant l'un à l'autre, reviennent par un troisième enroulement de stator (27), afin de mettre le rotor (29) dans une position de stationnement fixe et prédéterminée.

2. Procédé d'injection selon la revendication 1 et comprenant les étapes supplémentaires suivantes :
déterminer une température de référence ; et
activer la procédure de préchauffage pour préchauffer la pompe (16) avant de commencer à pomper le liquide de fonctionnement à base d'eau uniquement si la température de référence est inférieure à une valeur de seuil (VL2).

3. Procédé d'injection selon la revendication 2, dans lequel l'intensité des deux courants électriques alternatifs (I₁, I₂) alimentés pendant la procédure de préchauffage dépend d'une différence entre la température de référence et la valeur de seuil (VL2).

4. Procédé d'injection selon la revendication 3, dans lequel l'intensité des deux courants électriques alternatifs (I₁, I₂) alimentés pendant la procédure de préchauffage augmente au fur et à mesure que la différence entre la température de référence et la valeur de seuil (VL2) augmente.

5. Procédé d'injection selon l'une des revendications 1 à 4, dans lequel les deux courants électriques alternatifs (I₁, I₂) alimentés pendant la procédure de préchauffage ont la même intensité.

6. Unité de commande (26) pour commander un moteur électrique (25) qui actionne une pompe (16) pour amener un liquide de fonctionnement à base d'eau dans un système d'alimentation par injection (13) pour un moteur à combustion interne (1) ; dans laquelle le moteur électrique (25) comprend trois enroulements de stator (27) et un rotor (29), qui est prévu avec au moins un aimant permanent (30) ; l'unité de commande (26) est configurée pour :
alimenter, pendant un fonctionnement normal pour pomper le liquide de fonctionnement à base d'eau, les trois enroulements de stator (27) avec trois courants électriques alternatifs (I₁, I₂, I₃) correspondants qui sont déphasés, afin de générer un champ magnétique rotatif, qui entraîne l'aimant permanent (30) et donc provoque la rotation du rotor (29) ; et
alimenter, pendant une procédure de préchauffage pour préchauffer la pompe (16) avant de commencer à pomper le liquide de fonctionnement à base d'eau, les enroulements de stator (27) avec un système de courants électriques alternatifs (I₁, I₂) qui ne détermine pas le déplacement du rotor (29) et génère uniquement de la chaleur par effet Joule dans les enroulements de stator (27) ;
l'unité de commande (26) est **caractérisée en ce qu'**elle est configurée pour :
alimenter, pendant la procédure de préchauffage pour préchauffer la pompe (16) avant de commencer à pomper le liquide de fonctionnement à base d'eau, deux enroulements de stator (27) uniques avec deux courants électriques alternatifs (I₁, I₂) correspondants qui sont en phase entre eux et en les ajoutant l'un à l'autre, reviennent par le biais d'un troisième enroulement de stator (27) ; et
alimenter, lorsque le moteur électrique (25) est arrêté pendant un arrêt prolongé, après un arrêt du moteur à combustion interne (1) et donc lorsque le système d'alimentation par injection (13) passe dans une condition de stationnement, deux enroulements de stator (27) uniques avec deux courants électriques alternatifs (I₁, I₂) correspondants, qui sont en phase entre eux, et en les ajoutant l'un à l'autre, reviennent par le biais d'un troisième enroulement de stator (27), afin de mettre le rotor (29) dans une position de stationnement fixe et prédéterminée.

7. Moteur à combustion interne (1) comprenant :
au moins un cylindre (2) prévu avec une chambre de combustion dans laquelle, suite à la combustion, des gaz d'échappement sont générés ;
un conduit d'échappement (10) qui est parcouru par les gaz d'échappement provenant de la chambre de combustion ;
un système d'alimentation par injection de liquide de fonctionnement à base d'eau (13) comprenant : un réservoir (15) qui est conçu pour contenir une quantité d'un liquide de fonctionnement à base d'eau, au moins un injecteur (14) pour injecter le liquide de fonctionnement à base d'eau, et une pompe (16) qui est actionnée par un moteur électrique (25) et aspire le liquide de fonctionnement à base d'eau du réservoir (15) afin d'amener le liquide de fonctionnement à base d'eau dans l'injecteur (14) ; et
une unité de commande (26) ;
dans lequel le moteur électrique (25) comprend trois enroulements de stator (27) et un rotor (29) qui est prévu avec au moins un aimant permanent (30) ;
dans lequel l'unité de commande (26) est configurée pour alimenter, pendant un fonctionnement normal pour pomper le liquide de fonctionnement à base d'eau, les trois enroulements de stator (27) avec trois courants électriques alternatifs (I₁, I₂, I₃) correspondants qui sont déphasés, afin de générer un champ magnétique rotatif qui entraîne l'aimant permanent (30) et donc provoque la rotation du rotor (29) ; et
dans lequel l'unité de commande (26) est configurée pour alimenter, pendant une procédure de préchauffage pour préchauffer la pompe (16) avant de commencer à pomper le liquide de fonctionnement à base d'eau, les enroulements de stator (27) avec un système de courants électriques alternatifs (I₁, I₂) qui ne détermine pas le déplacement du rotor (29) et génère uniquement de la chaleur par effet Joule dans les enroulements de stator (27) ;
le moteur à combustion interne (1) est **caractérisé en ce que** l'unité de commande (26) est configurée pour :
alimenter, pendant la procédure de préchauffage pour préchauffer la pompe (16) avant de commencer à pomper le liquide de fonctionnement à base d'eau, deux enroulements de stator (27) uniques avec deux courants électriques alternatifs (I₁, I₂) correspondants qui sont en phase l'un avec l'autre et en les ajoutant l'un à l'autre, reviennent par le biais d'un troisième enroulement de stator (27) ; et
alimenter, lorsque le moteur électrique (25) est arrêté pendant un arrêt prolongé après un arrêt du moteur à combustion interne (1) et donc lorsque le système d'alimentation par injection (13) passe dans une condition de stationnement, deux enroulements de stator (27) uniques avec deux courants électriques alternatifs (I₁, I₂) correspondants qui sont en phase l'un avec l'autre et en les ajoutant l'un à l'autre, reviennent par le biais d'un troisième enroulement de stator (27), afin de mettre le rotor (29) dans une position de stationnement fixe et prédéterminée.

8. Moteur à combustion interne (1) selon la revendication 7, dans lequel :
le système d'alimentation par injection (13) comprend au moins un dispositif de chauffage électrique (22, 23, 24) ; et
l'unité de commande (26) est configurée pour mettre en marche, suite à un démarrage à froid du moteur à combustion interne (1), le dispositif de chauffage électrique (22, 23, 24).

9. Moteur à combustion interne (1) selon la revendication 8, dans lequel :
l'unité de commande (26) est configurée pour déterminer une température de référence ;
l'unité de commande (26) est configurée pour mettre en marche, suite à un démarrage à froid du moteur à combustion interne (1), le dispositif de chauffage électrique (22, 23, 24), lorsque la température de référence est inférieure à une première valeur de seuil (VL1) ; et
l'unité de commande (26) est configurée pour réaliser la procédure de préchauffage afin de préchauffer la pompe (16) avant de commencer à pomper le liquide de fonctionnement à base d'eau, lorsque la température de référence est inférieure à une seconde valeur de seuil (VL2) qui est inférieure à la première valeur de seuil (VL1).

10. Moteur à combustion interne (1) selon la revendication 7, 8 ou 9, dans lequel l'unité de commande (26) est configurée pour commander la pompe (16) afin de vider l'injecteur (14) et la pompe (16) du liquide de fonctionnement à base d'eau, lorsque le moteur à combustion interne (1) est arrêté.
